# EUROPÄISCHE PATENTSCHRIFT

(11) **EP 0 904 880 B1**
(45) Veröffentlichungstag und Bekanntmachung des Hinweises auf die Patenterteilung: **02.05.2003**
(21) Anmeldenummer: 98111320.2
(22) Anmeldetag: 19.06.1998
(51) Int. Cl.: B23G 5/18

(54) **Gewindefräsbohr-Werkzeug für Werkstoffe höherer Festigkeit**
Thread milling cutter for tough materials
Fraise à fileter pour matériaux tenaces

(30) Priorität: 09.09.1997 DE 19739370
(43) Veröffentlichungstag der Anmeldung: 31.03.1999
(73) Patentinhaber: Schmitt, Norbert M., Dr., D-90537 Feucht (DE)
(72) Erfinder: Schmitt, Norbert M., Dr., D-90537 Feucht (DE)
(74) Vertreter: Böhme, Volker, Dipl.-Ing.

(56) Entgegenhaltungen:
- EP-A- 0 641 620
- DE-U- 9 205 275
- US-A- 4 708 542

## Beschreibung

Die Erfindung betrifft ein Gewindefräsbohr-Werkzeug für Werkstoffe höherer Festigkeit, das einen Aufnahmeschaft, einen Fräsbereich mit Gewindefrässchneiden an steigungsfreien Gewindefräszähnen am Umfang und einen Stirnbereich mit Bohrfrässchneiden bildet, bei dem die die Frässchneiden bildenden Werkzeugbereiche von Hartstoff gebildet sind und bei dem die Gewindefrässchneiden einen Spanwinkel bilden.

Bei einem bekannten (DE 88 03 565 U) Gewindefräsbohr-Werkzeug dieser Art sind die Gestaltung des Spanwinkels und die Gestaltung der Werkzeugoberfläche nicht angegeben. Mit dem Gewindefräsbohr-Werkzeug soll in Aluminium-Werkstücken gearbeitet werden, wozu als Werkzeugmaterial Hartmetall dann angebracht ist, wenn mit hohen Schnittgeschwindigkeiten gearbeitet werden soll; Werkstoffe höherer Festigkeit sind z.B. hochfeste Werkstoffe; hochfeste Werkstoffe sind z.B. bestimmte hochfeste Stähle und weisen in der Regel eine Härte von mindestens 40 Rockwell, z.B. 56 - 58 Rockwell auf.

Für einen Gewindebohrer ist es bekannt (EP 0 641 620 A), den Spanwinkel der Gewindeschneiden negativ zu gestalten und im Bereich der Gewindeschneiden eine Hartstoffdecke vorzusehen, und bekannt (US 47 08 542 A), den Spanwinkel der Gewindeschneiden 0 oder negativ zu gestalten und im Bereich der Gewindeschneiden eine Hartstoffbeschichtung vorzusehen. Ein Gewindebohrer bildet im Schneidbereich mit Steigung versehene Gewindeschneidzähne und ist am Stirnbereich frei von Schneiden. Dagegen weist ein Gewindefräsbohr-Werkzeug die Gewindefrässchneiden an steigungsfreien Gewindefräszähnen auf und bildet den Stirnbereich mit Bohrfrässchneiden. Auch arbeitet ein Gewindefräsbohr-Werkzeug nicht nur mit Rotation, sondern auch mit Zirkulardrehung des Werkzeugs.

Eine Aufgabe der Erfindung ist es daher, ein Gewindefräsbohr-Werkzeug der eingangs genannten Art zu schaffen, mit dem man auch in hochfesten Werkstoffen mit Erfolg arbeiten kann. Das erfindungsgemäße Gewindefräsbohr-Werkzeug ist, diese Aufgabe lösend, dadurch gekennzeichnet, daß der Spanwinkel der Gewindefrässchneiden null oder negativ und im Bereich der Frässchneiden eine Hartstoffbeschichtung vorgesehen ist.

Durch die Kombination von Hartstoff als Frässchneiden-Werkzeugbereich-Material, Hartstoffbeschichtung im Schneidenbereich und negativem Spanwinkel wird es möglich, mit dem Gewindefräsbohr-Werkzeug auch in hochfesten Werkstoffen störungsfrei und verschleißarm zu arbeiten. Dabei werden für die Zirkulardrehung und für die Rotation des Gewindefräsbohr-Werkzeugs annähernd die gleichen Drehzahlen verwendet, die üblicherweise bei der Bearbeitung weicher Werkstoffe, wie z.B. Aluminium, verwendet werden. Der Hartstoff der Frässchneiden-Werkzeugbereiche ist ein gesinterter Hartstoff. Das Gewindefräsbohr-Werkzeug kann auch bei herkömmlichen Zirkulardrehungs- und Rotations-Richtungen beim Gegenlauffräsen eingesetzt werden, wobei jedoch ein noch beachtlicher Verschleiß der Frässchneiden in Kauf zu nehmen ist.

Entsprechend der Erfindung werden die Hartstoff-Frässchneiden-Werkzeugbereiche und die Frässchneiden-Hartstoffbeschichtung bei einem Gewindefräsbohr-Werkzeug angewendet in Kombination mit der Maßnahme, daß der Spanwinkel der Gewindefrässchneide negativ ist. Während mit einem positiven Spanwinkel kleinere Keilwinkel verbunden sind, wobei der Span abhebend geschnitten wird, sind mit einem negativen Spanwinkel größere Keilwinkel verbunden, wobei das Material weggequetscht wird.

Die von Hartstoff gebildeten Frässchneiden-Werkzeugbereiche sind z.B. Schneidplatten; in der Regel ist das Gewindefräsbohr-Werkzeug jedoch durchgehend einstückig und liegt ein Vollhartstoffwerkzeug vor. Mindestens der Frässchneidenbereich weist Spannuten auf, die z.B. gerade oder gedrallt sind.

In der Regel ist der gesinterte Hartstoff ein Hartmetall einer Mindesthärte von 1.700 HV (= Härte nach Vickers). In der Regel ist die Hartstoffbeschichtung eine im PVD- oder CVD-Verfahren aufgetragene Verschleißschutzschicht (PVD = physical vapor deposition; CVD = chemical vapor deposition). Das Material ist z.B. Titannitrit oder Titancarbonitrit. Die Hartstoffbeschichtung ist z.B. einlagig oder mehrlagig und weist in der Regel eine Oberflächenhärte von mindestens 3.000 HV auf.

Besonders zweckmäßig und vorteilhaft ist es auch, wenn der Spanwinkel der Gewindefrässchneiden 0° bis minus 25°, vorzugsweise minus 10° bis minus 15° beträgt. In diesem Bereich liegende negative Spanwinkel sind je nach den im Einzelfall gegebenen Arbeitsbedingungen geeignet. Der negative Spanwinkel wird in der Regel in Anpassung an den jeweiligen Werkstoff des Werkstücks gewählt.

Besonders zweckmäßig und vorteilhaft ist es ebenso, wenn die Bohrfrässchneiden einen Spanwinkel von plus 3° bis minus 15°, vorzugsweise von 0° bis minus 10°, insbesondere von minus 5° bis minus 10° haben. Hierdurch wird die Verschleißarmut auch an den Bohrfrässchneiden erreicht.

Besonders zweckmäßig und vorteilhaft ist es sodann, wenn die Hartstoffbeschichtung den Aufnahmeschaft ausspart. Dies verbilligt die Herstellung des erfindungsgemäßen Gewindefräsbohr-Werkzeugs.

Besonders zweckmäßig und vorteilhaft ist es weiterhin, wenn das Werkzeug mit Kühlmittelkanälen vom Aufnahmeschaft bis in den Fräsbereich und Stirnbereich versehen ist. Durch die an sich bekannte Zufuhr von Kühlmittel ist das erfindungsgemäße Gewindefräsbohr-Werkzeug zum Arbeiten in hochfesten Werkstoffen verbessert geeignet.

Die Erfindung besteht für das vorher beschriebene erfindungsgemäße Gewindefräsbohr-Werkzeug auch darin, daß das Werkzeug beim Gewindefräsen in einem Werkstück gleichzeitig eine Vorschubbewegung in das Werkstück, eine Zirkulardrehung und eine Rotation macht und daß die Zirkulardrehung und die Rotation am Werkstück zum- Gleichlauffräsen gegensinnig sind. Mit anderen Worten: Der aus der Gewindesteigungsrichtung verfahrensbedingt resultierenden Zirkulardrehrichtung ist eine gegensinnige Werkzeugdrehrichtung zugeordnet, so daß nach dem Prinzip des Gleichlauffräsens gearbeitet wird.

Durch die Kombination dieser Betriebsweise des Gewindefräsbohr-Werkzeugs mit der erfindungsgemäßen Gestaltung des Gewindefräsbohr-Werkzeugs wird das Innengewindefräsen in hochfesten Werkstoffen verbessert erreicht, da die Vorteile des Gleichlauffräsens mitgenutzt werden. Beim Gleichlauffräsen beginnt der Frässchnitt beim dickeren Ende des abzutragenden kommaförmigen Spans und endet der Frässchnitt am dünneren Ende des kommaförmigen Spans; dies verringert den Abrieb an den Gewindefrässchneiden und führt zur Verringerung der Klemmneigung des Werkzeugs. Die Anwendung des Gleichlauffräsens beim Gewindefräsen ermöglicht oder erleichtert das Gewindefräsen in hochfesten Werkstoffen. Für die Herstellung eines Rechtsgewindes gehen die Zirkulardrehung im Uhrzeigersinn und die Rotation im Gegenuhrzeigersinn; für die Herstellung eines Linksgewindes gehen die Zirkulardrehung im Gegenuhrzeigersinn und die Rotation im Uhrzeigersinn.

Das erfindungsgemäße Gewindefräsbohr-Werkzeug läßt sich ohne Anschnitt oder mit Anschnitt gestalten; bevorzugt ist ein kurzer Anschnitt über ca. einen Gewindegang. Bei der Hartstoffbeschichtung wird z.B. auf dem Hartmetall zunächst eine als Verbindungsmittel wirkende Zwischenschicht aus Titannitrit aufgebracht, auf die dann mit dem PVD-Verfahren nur eine Lage aufgebracht wird, die 2 - 3 µm dick ist und aus Titan-Aluminium-Nitrit besteht.

Bei dem erfindungsgemäßen Gewindefräsbohr-Werkzeug ist in der Regel der Außendurchmesser des Fräsbereichs mit den Gewindefräszähnen größer als der Außendurchmesser des Stirnbereichs mit den Bohrfrässchneiden. Bei diesen Außendurchmesser-Verhältnissen sind die Gestaltung und Betriebsweise des erfindungsgemäßen Werkzeugs primär von Interesse. Das erfindungsgemäße Gewindefräsbohr-Werkzeug wird stets so eingesetzt, daß das Erzeugen von Kernloch und Gewinde gleichzeitig erfolgt.

In der Zeichnung ist eine bevorzugte Ausführungsform der Erfindung dargestellt und zeigt
- Fig. 1: eine Seitenansicht eines Gewindefräsbohr-Werkzeugs für Werkstoffe höherer Festigkeit,
- Fig. 2: eine Stirnansicht des Werkzeugs gemäß Fig. 1,
- Fig. 3: schematisch eine Zuordnung des Werkzeugs gemäß Fig. 1 zu einem Werkstück,
- Fig. 4: eine Verdeutlichung der Bewegung des Werkzeugs gemäß Fig. 1 beim Erzeugen eines Innengewindes und
- Fig. 5: eine Verdeutlichung einer Gewindefrässchneide mit negativem Spanwinkel,
- Fig. 6: eine Verdeutlichung einer Bohrfrässchneide mit negativem Spanwinkel und
- Fig. 7: schematisch Gewindefräszähne mit Anschnitt.

Das Gewindefräsbohr-Werkzeug gemäß Zeichnung weist hinten einen Aufnahmeschaft 1 zum Einsatz in Spannwerkzeug an einer Werkzeugspindel einer Werkzeugmaschine auf. An den Aufnahmeschaft 1 schließt sich nach vorne hin über einen Übergangsbereich ein Fräsbereich 2 an, der mit vier geraden Spannuten 3 versehen ist und vier Reihen von hintereinander angeordneten Gewindefräszähnen 4 aufweist, wobei die Reihen in axialer Richtung verlaufen. Die Gewindefräszähne 4 begrenzen zwischen sich je eine Nut 5 und bilden Gewindefrässchneiden 6. Das Werkzeug läuft nach vorne hin in einem Stirnbereich 7 aus, der mit Bohrschneiden 8 versehen ist, die als Stirn-Bohrschneiden verlaufen und dann nach außen abgewinkelt oder abgerundet zur Mantelfläche in Mantelschneiden übergehen, die bei der Erzeugung des Kernloches ebenfalls mitwirken. Es sind die in einer Reihe angeordneten Gewindefräszähne 4 gleich groß.

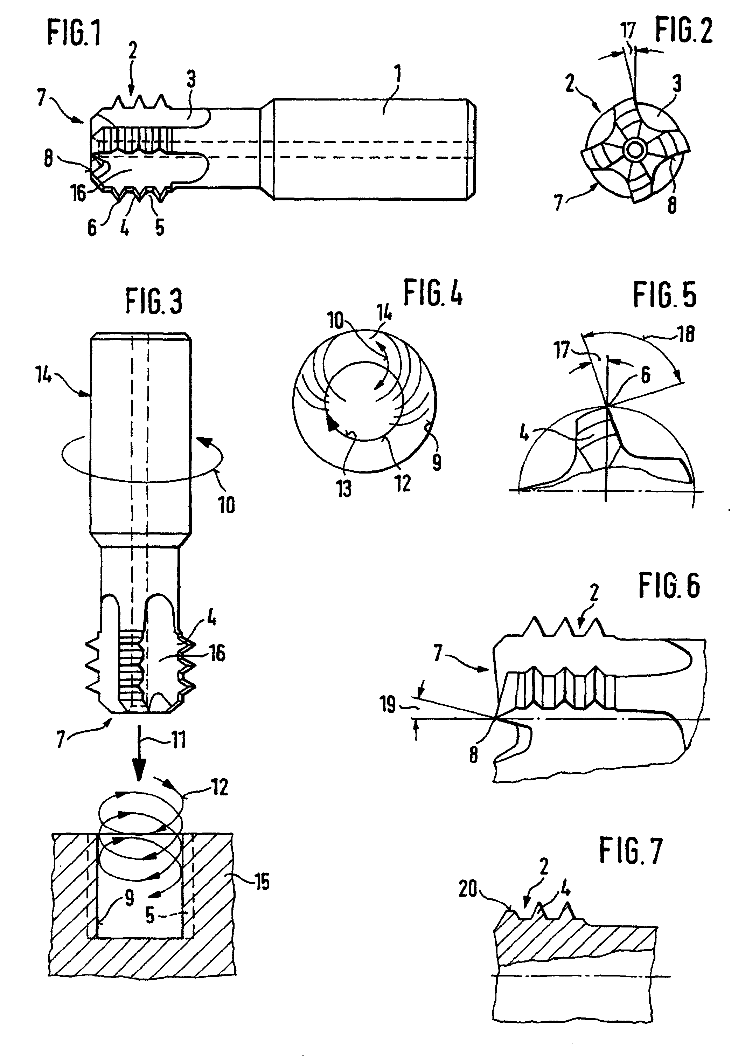

Mit dem Werkzeug werden ein Kernloch 9 und ein Gewinde 5 gleichzeitig erzeugt. Das mit einer Drehrichtung 10 rotierende Werkzeug 14 wird mit Zirkulardrehung 13 und gleichzeitigem axialem Vorschub 11 entlang einer Wendelbahn 12 in das Werkstück 15 bewegt. Dabei kommt zunächst der Stirnbereich 7 in Eingriff. Mit zunehmender Tiefe kommen die Gewindefräszähne 4 in Eingriff und stellen gleichzeitig zur Kernlochbohrung das Gewinde her. Über die Anzahl der zirkularen Umläufe und dem gewindesteigungsabhängigen axialen Vorschub ist die Gewindebohrungstiefe einstellbar. Das Werkzeug ist in der gesamten Oberfläche des Fräsbereichs 2 und des Stirnbereichs 7, nicht jedoch an der Oberfläche des Aufnahmeschafts 1 mit einer Hartstoffbeschichtung 16 versehen. Gemäß Fig. 5 sind die Gewindezähne 4 jeweils mit der Gewindefrässchneide 6 derart versehen, daß ein negativer Spanwinkel 17 zwischen einer Radiallinie durch die Frässchneide und einer Tangentiallinie an die Frässchneide auf der Brustseite des Gewindefräszahns 4 gegeben ist. Auch der Keilwinkel 18 zwischen der Radiallinie und einer Tangentiallinie auf der Rückenseite des Gewindefräszahns ist-in Fig. 5 gezeigt.

Gemäß Fig. 6 ist am Stirnbereich 7 die Stirnschneide 8 mit einem negativen Spanwinkel 19 versehen. Gemäß Fig. 7 ist ein erster Gewindefräszahn 4 des Gewindefräsbereichs 2 mit einem Anschnitt 20 versehen.

## Patentansprüche

1. Gewindefräsbohr-Werkzeug für Werkstoffe höherer Festigkeit, das einen Aufnahmeschaft, einen Fräsbereich mit Gewindefrässchneiden an steigungsfreien Gewindefräszähnen am Umfang und einen Stirnbereich mit Bohrfrässchneiden bildet,
bei dem die die Frässchneiden bildenden Werkzeugbereiche von Hartstoff gebildet sind und
bei dem die Gewindefrässchneiden einen Spanwinkel bilden,
**dadurch gekennzeichnet,**
**daß** der Spanwinkel (17) der Gewindefrässchneiden (8) null oder negativ und im Bereich der Frässchneiden (6, 8) eine Hartstoffbeschichtung (16) vorgesehen ist.

2. Gewindefräsbohr-Werkzeug nach Anspruch 1, **dadurch gekennzeichnet, daß** der Hartstoff ein gesintertes Hartmetall einer Mindesthärte von 1.700 HV ist.

3. Gewindefräsbohr-Werkzeug nach Anspruch 1 oder 2, **dadurch gekennzeichnet, daß** die Hartstoffbeschichtung (16) eine Verschleißschutzschicht mit einer Mindesthärte von 2.500 HV ist.

4. Gewindefräsbohr-Werkzeug nach Anspruch 1, 2 oder 3, **dadurch gekennzeichnet, daß** der Spanwinkel (17) 0° bis minus 25°, vorzugsweise minus 10° bis minus 15° beträgt.

5. Gewindefräsbohr-Werkzeug nach einem der vorhergehenden Ansprüche, **dadurch gekennzeichnet, daß** die Bohrfrässchneiden (8) einen Spanwinkel von plus 3° bis minus 15°, vorzugsweise von 0° bis minus 10°, insbesondere von minus 5° bis minus 10° haben.

6. Gewindefräsbohr-Werkzeug nach einem der vorhergehenden Ansprüche, **dadurch gekennzeichnet, daß** die Hartstoffbeschichtung (16) den Aufnahmeschaft (1) ausspart.

7. Gewindefräsbohr-Werkzeug nach einem der vorhergehenden Ansprüche, **dadurch gekennzeichnet, daß** es mit Kühlmittelkanälen vom Aufnahmeschaft bis in den Fräsbereich und Stirnbereich versehen ist.

8. Verfahren zum Gewindefräsen in einem Werkstück mit einem Gewindefräsbohr-Werkzeug nach einem der Ansprüche 1 bis 7, wobei, beim Gewindefräsen das Werkzeug gleichzeitig eine Vorschubbewegung in das Werkstück, eine Zirkulardrehung und eine Rotation macht,
**dadurch gekennzeichnet, daß** die Zirkulardrehung (13) und die Rotation (10) am Werkstück (15) zum Gleichlauffräsen gegensinnig sind.

9. Anwendung des Gewindefräsbohr-Werkzeugs nach einem der vorhergehenden Ansprüche zum Gewindefräsen in hochfesten Werkstoffen.

## Claims

1. Thread milling and drilling tool for materials of relatively high strength, which constitutes a retaining shaft, a milling region with thread-milling cutting-edges on non-pitched thread-milling teeth disposed around the circumference and an end-face region with drill milling cutting-edges, wherein the regions of the tool forming the milling cutting-edges are made from hard material and wherein the thread-milling cutting-edges form a rake angle,
**characterised in that** the rake angle (17) of the thread-milling cutting-edges (8) is zero or negative, and that a hard material coating (16) is provided in the region of the milling cutting-edges (6, 8).

2. Thread milling and drilling tool according to claim 1, **characterised in that** the hard material is a sintered hard metal alloy with a minimum hardness of 1,700 HV.

3. Thread milling and drilling tool according to claim 1 or 2, **characterised in that** the hard material coating (16) is a wear-resistant layer with a minimum hardness of 2,500 HV.

4. Thread milling and drilling tool according to claim 1, 2 or 3, **characterised in that** the rake angle (17) is 0° to minus 25°, preferably minus 10° to minus 15°.

5. Thread milling and drilling tool according to any one of the preceding claims, **characterised in that** the drill milling cutting-edges (8) have a rake angle of plus 3° to minus 15°, preferably from 0° to minus 10°, in particular from minus 5° to minus 10°.

6. Thread milling and drilling tool according to any one of the preceding claims, **characterised in that** the hard material coating (16) does not cover the retaining shaft (1).

7. Thread milling and drilling tool according to any one of the preceding claims, **characterised in that** coolant channels are provided from the retaining shaft down into the milling region and the end-face region.

8. Method for thread milling in a work piece with a thread milling and drilling tool according to any one of claims 1 to 7, wherein, during the thread milling, the tool simultaneously performs forward feeding movement into the work piece, circular turning and rotation,
**characterised in that** the circular turning (13) and the rotation (10) on the work piece (15) occur in opposite directions for climb milling.

9. Use of the thread milling and drilling tool according to any one of the preceding claims for thread milling in high-strength materials.

## Revendications

1. Fraise à fileter pour matériaux à résistance élevée, qui forme une queue, une section de fraisage avec des arêtes de coupe à fraiser les filets sur des dents de fraisage de filet sans pas à la périphérie et une section frontale avec des arêtes de coupe de perçage-fraisage, pour laquelle les parties de l'outil qui constituent les arêtes de coupe de perçage-fraisage sont constituées en matériau dur et pour laquelle les arêtes de coupe à fraiser les filets forment un angle de coupe orthogonal, **caractérisée en ce que** l'angle de coupe orthogonal (17) des arêtes de coupe à fraiser les filets (8) est nul ou négatif et **en ce que** dans la section de perçage-fraisage (6, 8) est prévu un placage de matériau dur (16).

2. Fraise à fileter selon la revendication 1, **caractérisée en ce que** le matériau dur est un métal dur fritté d'une dureté minimale de 1700 HV.

3. Fraise à fileter selon une des revendications 1 ou 2, **caractérisée en ce que** le placage de matériau dur (16) est une couche protectrice contre l'usure d'une dureté minimale de 2500 HV.

4. Fraise à fileter selon une des revendications 1, 2 ou 3, **caractérisée en ce que** l'angle de coupe orthogonal (17) est compris entre 0° et moins 15°, de préférence entre moins 10° et moins 15°.

5. Fraise à fileter selon une des revendications ci-avant, **caractérisée en ce que** les arêtes de coupe de perçage (8) ont un angle de coupe orthogonal compris entre plus 3° et moins 15°, de préférence entre 0° et moins 10°, en particulier de moins 5° à moins 10°.

6. Fraise à fileter selon une des revendications ci-avant, **caractérisée en ce que** le placage de matériau dur (16) ne couvre pas la queue (1).

7. Fraise à fileter selon une des revendications ci-avant, **caractérisée en ce qu'**elle est dotée de canaux à réfrigérant de la queue jusqu'à la section de fraisage et jusqu'à la section frontale.

8. Procédé pour fraiser des filets dans une pièce ouvrée avec une fraise à fileter selon une des revendications 1 à 7, pour lequel, lors du fraisage du filet, l'outil exécute en même temps un mouvement d'avance dans la pièce ouvrée, une translation circulaire et une rotation, **caractérisé en ce que** la translation circulaire (13) et la rotation (10) sur la pièce ouvrée (15) sont de sens inverse pour un fraisage en avalant.

9. Application de la fraise à fileter selon une des revendications ci-avant pour le fraisage de filets dans des matériaux à haute résistance.
